Europäisches Patentamt

European Patent Office

Office européen des brevets

(19)

(11) Veröffentlichungsnummer: **0 439 672 A1**

## (12) EUROPÄISCHE PATENTANMELDUNG

(21) Anmeldenummer: **90115749.5**

(22) Anmeldetag: **17.08.90**

(51) Int. Cl.5: **B60T 17/02**

(30) Priorität: **31.01.90 DE 4002771**

(43) Veröffentlichungstag der Anmeldung:
**07.08.91 Patentblatt 91/32**

(84) Benannte Vertragsstaaten:
**DE FR GB IT**

(71) Anmelder: **VDO Adolf Schindling AG**
**Gräfstrasse 103**
**W-6000 Frankfurt/Main 90(DE)**

(72) Erfinder: **Jurr, Richard**
**Langenbergstrasse 11**
**W-6292 Weilmünster 4(DE)**

(74) Vertreter: **Klein, Thomas, Dipl.-Ing. (FH)**
**Sodener Strasse 9 Postfach 6140**
**W-6231 Schwalbach a. Ts.(DE)**

(54) **Unterdruckversorgungsanlage.**

(57) In eine von einem Verbraucher (1) zu einem Ansaugstutzen (4) führende Leitung (2) ist eine Flügelzellenpumpe (5) geschaltet. Der Pumpenauslaß (8) ist dem Ansaugstutzen (4) zugewandt und weist ein zum Ansaugstutzen (4) hin öffnendes Rückschlagventil (9) auf. Dieses Rückschlagventil besitzt einen topfförmigen Schließkörper und ist im Pumpengehäuse integriert. Ebenso kann ein einlaßseitiges Rückschlagventil im Pumpengehäuse integriert sein, falls die Flügelzellenpumpe (5) parallel zur Leitung (2) geschaltet werden soll.

EP 0 439 672 A1

# UNTERDRUCKVERSORGUNGSANLAGE

Die Erfindung betrifft eine Unterdruckversorgungsanlage mit einem Verbraucher, welcher über eine Leitung mit einem Ansaugstutzen eines Vergasers verbunden ist und bei der in dieser Leitung ein zum Ansaugstutzen hin öffnendes Rückschlagventil angeordnet ist.

Unterdruckversorgungsanlagen werden zum Beispiel im Kraftfahrzeug für die pneumatischen Stellelemente einer Zentralverriegelungsanlage oder für den Bremskraftverstärker benötigt. Falls im Ansaugstutzen des Vergasers bei den meisten Betriebsbedingungen ausreichender Unterdruck vorhanden ist, verbindet man üblicherweise den Ansaugstutzen mit dem Verbraucher. Da nicht immer und insbesondere nicht bei Stillstand der Verbrennungskraftmaschine genügend Unterdruck ansteht, ordnet man in die Leitung ein zum Ansaugstutzen hin öffnendes Rückschlagventil an.

Bekannt ist es auch, Verbraucher statt mit dem Ansaugstutzen mit einer Vakuumpumpe zu verbinden. Dadurch wird man vom Unterdruck im Ansaugstutzen unabhängig, so daß eine solche Unterdruckversorgungsanlage auch für Fahrzeuge geeignet ist, bei denen im Ansaugstutzen normalerweise kein ausreichender Unterdruck vorhanden ist. Nachteilig hierbei ist jedoch der relativ hohe Energiebedarf der Vakuumpumpe.

Der Erfindung liegt die Aufgabe zugrunde, eine Unterdruckversorgungsanlage der eingangs genannten Art so auszubilden, daß sie mit einem möglichst geringen Energiebedarf zu arbeiten vermag.

Diese Aufgabe wird erfindungsgemäß dadurch gelöst, daß zusätzlich eine bei nicht ausreichendem Unterdruck am Ansaugstutzen einschaltbare, mit ihrem Pumpenauslaß mit dem Ansaugstutzen verbundene Flügelzellenpumpe am Verbraucher angeschlossen ist.

Durch diese zusätzliche Anordnung der Flügelzellenpumpe wird erreicht, daß die Flügelzellenpumpe nur die Druckdifferenz zwischen dem im Ansaugstutzen zur Verfügung stehenden Unterdruck und dem erforderlichen Unterdruck im Verbraucher erzeugen muß. Dadurch ist ein wesentlich geringerer Energiebedarf notwendig als wenn die Flügelzellenpumpe auslaßseitig mit der Atmosphäre verbunden wäre.

Besonders kostengünstig ist die Unterdruckversorgungsanlage herstellbar, wenn das Rückschlagventil im Pumpengehäuse angeordnet ist und einen topfförmigen Schließkörper hat, welcher mit seiner Bodenfläche dem Pumpenauslaß abgewandt ist. Durch die Anordnung des Rückschlagventiles im Pumpengehäuse werden Schlauchverbindungen in der Unterdruckversorgungsanlage eingespart.

Von Vorteil ist es auch, wenn der Schließkörper ohne durch eine Schließfeder erzeugte Vorspannung frei verschieblich in einer Ventilkammer angeordnet ist. Hierdurch wird das Rückschlagventil besonders kostengünstig herstellbar. Weiterhin vermag es sehr flink zu arbeiten, da zum Öffnen nur geringe Kräfte zu überwinden sind.

Das Rückschlagventil dichtet sehr gut, ohne daß hierzu ein besonderer Fertigungsaufwand erforderlich ist, wenn gemäß einer anderen Weiterbildung der Erfindung der Schließkörper aus einem spritzbaren, in Kunststoff gebundenen Kohlewerkstoff besteht.

Besonders einfach ist die Unterdruckversorgungsanlage ausgebildet, wenn die Flügelzellenpumpe unmittelbar in die Leitung zwischen dem Verbraucher und dem Ansaugstutzen geschaltet ist. Die Flügelzellenpumpe muß hierbei natürlich zur Atmosphäre hin zuverlässig abgedichtet sein, damit sich nicht der Druck vom Verbraucher über die Pumpe zur Atmosphäre hin abbauen kann.

Auf eine gute Abdichtung der Flügelzellenpumpe zur Atmospäre hin kann man verzichten, wenn die Flügelzellenpumpe parallel zur Leitung zwischen dem Verbraucher und dem Ansaugstutzen angeordnet ist und einlaßseitig ein zur Flügelzellenpumpe hin öffnendes Rückschlagventil hat.

Zur weiteren Verminderung der Herstellungskosten trägt es bei, wenn beide Rückschlagventile im Gehäuse der Flügelzellenpumpe angeordnet sind.

Die Erfindung läßt zahlreiche Ausführungsmöglichkeiten zu. Zur weiteren Verdeutlichung ihres Grundprinzips sind mehrere davon in der Zeichnung dargestellt und werden nachfolgend beschrieben. In ihr zeigen die

Fig. 1    eine Prinzipskizze einer ersten Ausführungsform einer erfindungsgemäßen Unterdruckversorgungsanlage,

Fig. 2    eine Prinzipskizze einer zweiten Ausführungsform einer erfindungsgemäßen Unterdruckversorgungsanlage,

Fig. 3    einen senkrechten Schnitt durch eine Flügelzellenpumpe der Unterdruckversorgungsanlage,

Fig. 4    einen horizontalen Schnitt durch eine zweite Ausführungsform einer Flügelzellenpumpe im Bereich ihrer Ventile.

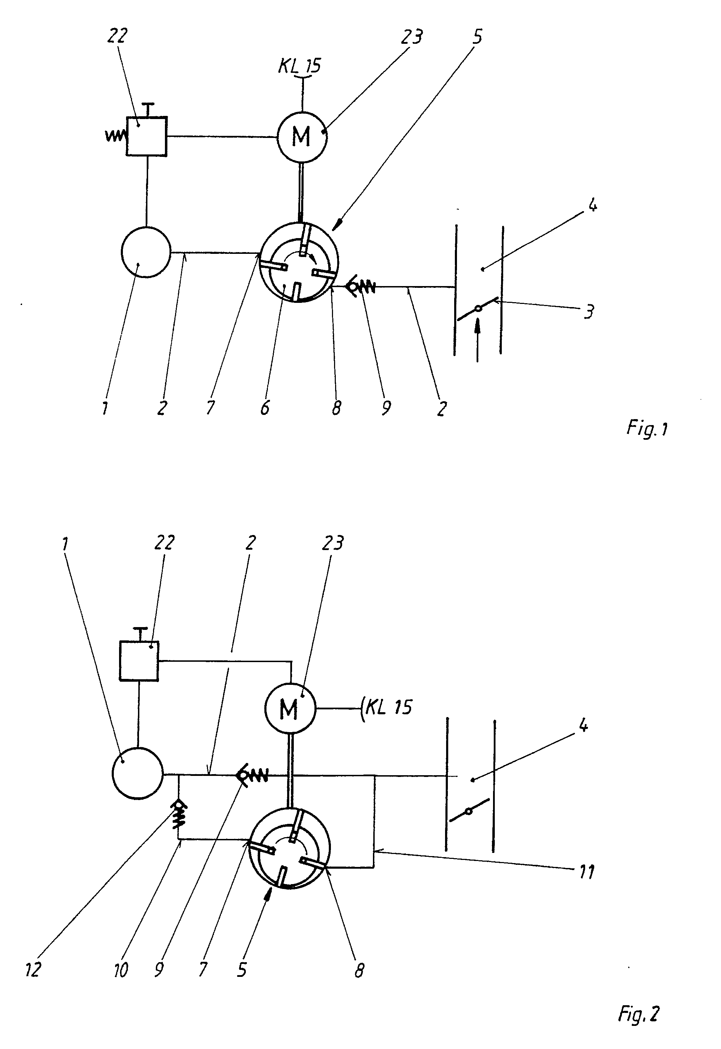

Die Figur 1 zeigt einen Verbraucher 1, der über eine Leitung 2 mit einem eine Drosselklappe 3 aufweisenden Ansaugstutzen 4 eines nicht gezeigten Verbrennungsmotors verbunden ist. In diese Leitung 2 ist eine Flügelzellenpumpe 5 geschaltet, die einen Rotor 6 hat. Diese Flügelzellenpumpe 5 hat auf der Seite des Verbrauchers 1 ihren Pumpeneinlaß 7 und auf der Seite des Ansaugstutzens 4 ihren Pumpenauslaß 8. In diesem Pumpenauslaß 8 ist ein Rückschlagventil 9 angeordnet, welches zum Ansaugstutzen 4 hin öffnet.

Steht am Ansaugstutzen 4 ein für den Verbraucher 1 ausreichend hoher Unterdruck an, dann braucht die Flügelzellenpumpe 5 nicht angetrieben zu werden. Ihr Rotor 6 dreht sich lediglich unangetrieben im Uhrzeigersinn, so daß Luft vom Verbraucher 1 zum Ansaugstutzen 4 angesaugt werden kann. Bei einem zu geringen Unterdruck im Ansaugstutzen 4 verhindert das Rückschlagventil 9, daß Luft in umgekehrter Richtung vom Ansaugstutzen 4 durch die Flügelzellenpumpe 5 zum Verbraucher 1 strömen kann. Wird der Verbraucher 1 vom Ansaugstutzen 4 nicht ausreichend evakuiert, dann schaltet ein Druckschalter 22 einen Pumpenmotor 23 ein, so daß die Flügelzellenpumpe 5 anläuft und zusätzlichen Unterdruck erzeugt.

Bei der Unterdruckversorgungsanlage gemäß Figur 2 ist die Flügelzellenpumpe 5 statt in die Leitung 2 parallel zur Leitung 2 geschaltet. Ihr Pumpeneinlaß 7 ist wiederum dem Verbraucher 1 und ihr Pumpenauslaß 8 dem Ansaugstutzen 4 zugewandt. Das Rückschlagventil 9 befindet sich in der Leitung 2. Von ihr zweigt eine Leitung 10 zum Pumpeneinlaß 7 ab. Eine Leitung 11 führt vom Pumpenauslaß 8 zum Ansaugstutzen 4 oder in die Leitung 2 hinter das Rückschlagventil 9. In die Leitung 10 ist ein Rückschlagventil 12 geschaltet, welches zum Pumpeneinlaß 7 hin öffnet. Genau wie beim zuvor beschriebenen Ausführungsbeispiel kann der Ansaugstutzen 4 über die Leitung 2 den Verbraucher 1 evakuieren. Parallel dazu kann die Flügelzellenpumpe 5 Luft vom Verbraucher 1 ansaugen und in den Ansaugstutzen 4 fördern. Eine Rückströmung wird in beiden Fällen durch die Rückschlagventile 9 bzw. 12 verhindert.

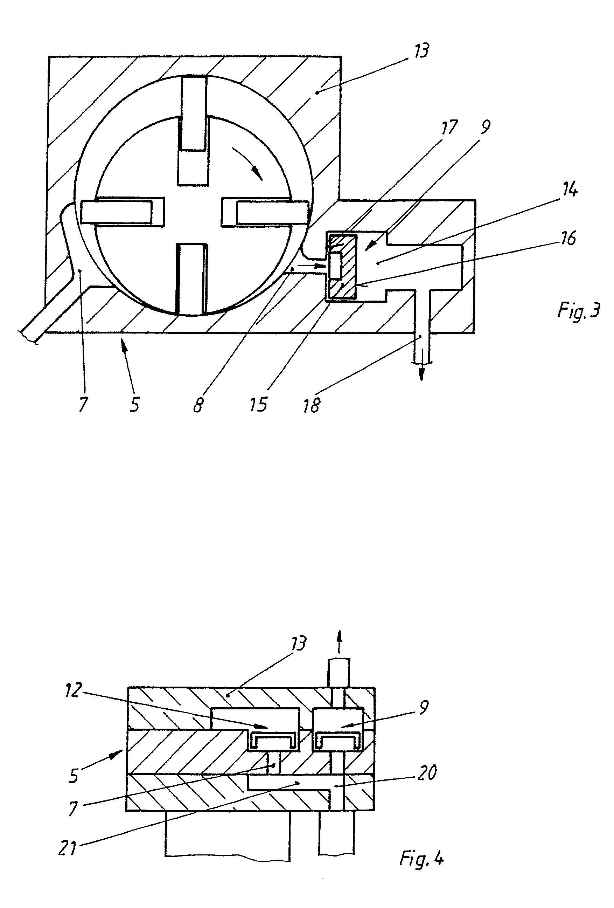

Die in Figur 3 gezeigte Flügelzellenpumpe 5 hat in ihrem Pumpengehäuse 13 das in Figur 1 gezeigte, auslaßseitige Rückschlagventil 9. Dieses Rückschlagventil 9 hat in einer Ventilkammer 14 einen topfförmigen Schließkörper 15, welcher mit seiner Bodenfläche 16 dem Pumpenauslaß 8 abgewandt ist und mit der Stirnfläche seines topfförmigen Randes auf einer Dichtfläche 17 aufsitzt und dadurch den Pumpenauslaß 8 versperrt. Der Schließkörper 15 besteht aus einem kunststoffgebundenen Kohlewerkstoff und kann im Spritzgußverfahren hergestellt werden. Er benötigt zu seiner Funktion keine Ventilfeder, welche ihn zur Dichtfläche 17 hin vorspannt.

In Figur 3 ist weiterhin ein Auslaßanschluß 18 dargestellt, über den die Flügelzellenpumpe 5 mit dem Ansaugstutzen 4 zu verbinden ist. Ist der Druck am Auslaßanschluß 18 höher als im Pumpenauslaß 8, so wird der in Offenstellung befindliche Schließkörper 15 von der Strömung mitgeführt und gegen die Dichtfläche 17 bewegt.

Bei der in Figur 4 gezeigten Flügelzellenpumpe 5 sind die in Figur 2 gezeigten Rückschlagventile 9 und 12 beide in das Pumpengehäuse 13 der Flügelzellenpumpe 5 integriert. Von einem Einlaßanschluß 19 führt eine axiale Verbindung 20 über das Rückschlagventil 9 zum Auslaßanschluß 18. Innerhalb der Flügelzellenpumpe 5 zweigt von dieser Verbindung 20 eine Verbindung 21 ab, die über das Rückschlagventil 12 zum Pumpeneinlaß 7 führt. Der Einlaßanschluß 1 und der Auslaßanschluß 18 sind mit der in Figur 2 gezeigten Leitung 2 zu verbinden. Die in Figur 2 dargestellten Leitungen 10, 11 werden bei Verwendung der Flügelzellenpumpe 5 nach Figur 4 unnötig, da innerhalb der Flügelzellenpumpe 5 die entsprechende Verbindung mit dem Rückschlagventil 12 geschaffen ist.

**Patentansprüche**

1. Unterdruckversorgungsanlage mit einem Verbraucher, welcher über eine Leitung mit einem Ansaugstutzen eines Vergasers verbunden ist und bei der in dieser Leitung ein zum Ansaugstutzen hin öffnendes Rückschlagventil angeordnet ist, dadurch gekennzeichnet, daß zusätzlich eine bei nicht ausreichendem Unterdruck am Ansaugstutzen (4) einschaltbare, mit ihrem Pumpenauslaß (8) mit dem Ansaugstutzen (4) verbundene Flügelzellenpumpe (5) am Verbraucher (1) angeschlossen ist.

2. Unterdruckversorgungsanlage nach Anspruch 1, dadurch gekennzeichnet, daß das Rückschlagventil (9) im Pumpengehäuse (13) angeordnet ist und einen topfförmigen Schließkörper (15) hat, welcher mit seiner Bodenfläche (16) dem Pumpenauslaß (8) abgewandt ist.

3. Unterdruckversorgungsanlage nach Anspruch 2, dadurch gekennzeichnet, daß der Schließkörper (15) ohne durch eine Schließfeder erzeugte Vorspannung frei verschieblich in einer Ventilkammer (14) angeordnet ist.

4. Unterdruckversorgungsanlage nach zumindest einem der vorangehenden Ansprüche, dadurch gekennzeichnet, daß der Schließkörper (15) aus einem spritzbaren, in Kunststoff gebundenen Kohlewerkstoff besteht.

5. Unterdruckversorgungsanlage nach zumindest einem der vorangehenden Ansprüche, dadurch gekennzeichnet, daß die Flügelzellenpumpe (5) unmittelbar in die Leitung (2) zwischen dem Verbraucher (1) und dem Ansaugstutzen (4) geschaltet ist.

6. Unterdruckversorgunganlage nach zumindest einem der vorangehenden Ansprüche, dadurch gekennzeichnet, daß die Flügelzellenpumpe (5) parallel zur Leitung (2) zwischen dem Verbraucher (1) und dem Ansaugstutzen (4) angeordnet ist und einlaßseitig ein zur Flügelzellenpumpe (5) hin öffnendes Rückschlagventil (12) hat.

7. Unterdruckversorgungsanlage nach zumindest einem der vorangehenden Ansprüche, dadurch gekennzeichnet, daß beide Rückschlagventile (9, 12) im Pumpengehäuse (13) der Flügelzellenpumpe (5) angeordnet sind.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 322 176   (WIELAND)<br>* Ansprüche 1, 2; Figur 1 *<br>– – – | 1,6 | B 60 T<br>17/02 |
| Y,X | DE-A-3 105 665   (BARMAG)<br>* Ansprüche 1, 4, 8; Figuren 1, 2 *<br>– – – | 1,6,2,3,7 | |
| A | EP-A-0 115 254   (BENDITALIA)<br>– – – | | |
| A | DE-U-8 223 654   (BARMAG)<br>– – – – – | | |

| RECHERCHIERTE SACHGEBIETE (Int. Cl.5) |
|---|
| B 60 T |

Der vorliegende Recherchenbericht wurde für alle Patentansprüche erstellt

| Recherchenort | Abschlußdatum der Recherche | Prüfer |
|---|---|---|
| Berlin | 24 April 91 | LUDWIG H J |